# EUROPEAN PATENT SPECIFICATION

(11) **EP 3 966 805 B1**
(45) Date of publication and mention of the grant of the patent: **05.03.2025**
(21) Application number: 20805218.3
(22) Date of filing: 08.05.2020
(51) Int. Cl.: G10L 15/30, G06F 3/16, G06F 40/166, G10L 15/22

(54) **ASYNCHRONOUS SPEECH TO TEXT DATA PROCESSING**
ASYNCHRONE VERARBEITUNG VON SPRACHE-ZU-TEXT-DATEN
TRAITEMENT DE DONNÉES VOIX-TEXTE ASYNCHRONES

(30) Priority: 10.05.2019 US 201962846077 P
(43) Date of publication of application: 16.03.2022
(73) Proprietor: NVOQ Incorporated, Boulder, CO 80301 (US)
(72) Inventor: FORD, Jon, Boulder, CO 80301 (US)
(74) Representative: J A Kemp LLP
(86) International application number: PCT/US2020/032173
(87) International publication number: WO 2020/231838

(56) References cited:
- US-A1- 2004 252 679
- US-A1- 2010 204 989
- US-A1- 2011 054 896
- US-A1- 2017 372 703

## Description

### CROSS-REFERENCE TO RELATED PATENT APPLICATIONS

This application claims priority to U.S. Provisional Patent Application Serial No. 62/846,077, filed May 10, 2019.

### BACKGROUND

Computing devices have existed for many years in a variety of form factors. The computing devices may be smartphones, tablets, notebooks, desktops, laptops, or the like. Applications that process the audio from the computing device (or the client device), such as speech to text data processing, have conventionally been co-resident with the local computer. In each case, the computing device and application interact directly with the user to process the audio to text.

A speech to text data processing application running on a computing device is one type of application that may receive input from, for example, a microphone connected directly to the computing device. For example, the speech to text data processing may generate a text file, such as a word document, similar to this patent application. Other examples include using the speech to text data processing to enter data into an editable field, such as by placing a cursor in a database field, a user interface field, or the like.

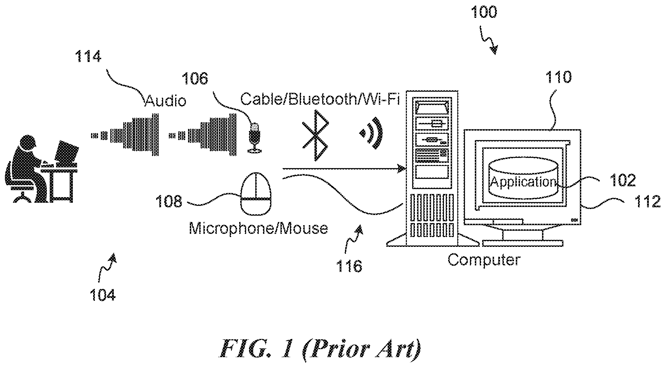

Figure 1 shows a conventional thick client computing device 100 (sometimes referred to simply as thick client 100 or computing device 100) is shown where an application 102 is running on the computing device 100 that is directly or locally coupled to an input 104, such as, for example, a microphone 106, mouse 108, or keyboard (where the keyboard is not specifically shown). Notice the input 104 could include a number of other devices such as for example, an optical pen, a touch screen, or the like as are generally known in the art. The conventional thick client 100 also has a monitor 110 that may display an interface or text document to accept and display the data input through the input 104 or a processed version of the data input through the input 104. As can be appreciated, the thick client 100 and the application 102 running on the thick client 100, which may provide a display 112 on the monitor 110, receives audio 114 from a user that is transmitted directly to the application 102 via the microphone 106. If the application 102 is, for example, a dictation application, the audio 114 could be converted by the application 102 running on the thick client 100 into text that would be displayed on display 112 in a Microsoft Word document or a text field. Thus, the user speaks into the microphone 106 that transmits the audio 114 to the thick client 100 via a cable or wireless network connection 116. The application 102 running on the thick client 100 receives the audio 114 and performs some operation and the results (optionally) are displayed on the display 112, which could be a computer screen or monitor, a print out, a sound out, or the like. Essentially, as is generally understood by the terminology of a thick client, the microphone, application, and various computer components are all co-resident in one computing environment regardless of how the peripherals, such as the microphone 106 and display 112 are connected to the computing device 100. The connections could include a direct, wired coupling or a local wireless protocol such as, for example, Bluetooth, Wi-Fi, a LAN, a WAN, a cellular network, a WLAN, other IEEE 802.xx networks, the Internet or the like.

The microphone 106 associated with thick client 100 may be a wired or wireless microphone. In both cases, the microphone 106 transmits data to the client device 100. The microphone 106 may be an application resident on a smartphone or the like that may include, for example, a Bluetooth or Wi-Fi connection to the client device having an installed copy of Dragon Naturally Speaking^{®}. The application converts a smartphone to a wireless microphone that transmits audio to the local client device.

With the Internet, it wasn't long before applications were no longer necessarily running or resident on the local computing device. In the case of the above referenced exemplary dictation/transcription application, the speech-to-text data processing application, engine, or module may be resident on a remote computing device that hosts the speech-to-text data processing. Typically, the remote computing device is more computationally powerful than the local workstation or client station. This is commonly referred to as a client computing device. In such an exemplary system, the audio is received by a microphone that is operationally coupled to a client device. The client device directs, via conventional network connection protocols, to the hosted application that processes the audio to text using the speech-to-text conversion engine and returns the text to the networked client device. The client device typically has a display onto which the results of the application's processing is displayed.

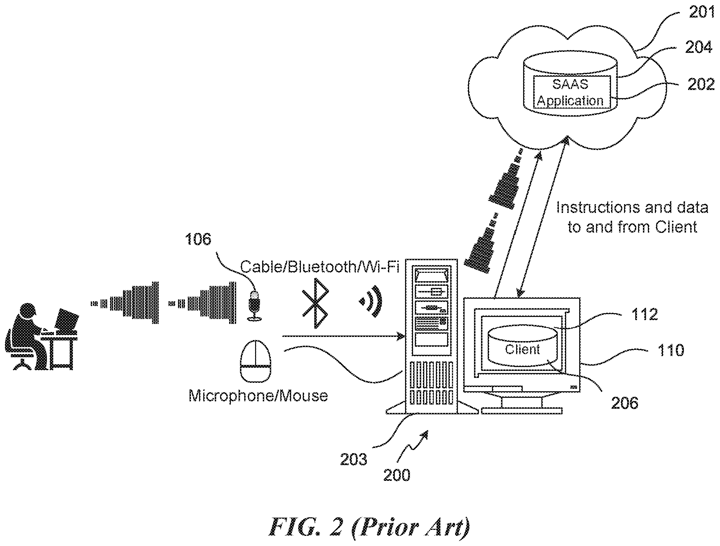

With reference to Figure 2, a hosted or server application 202 is resident on a server 204 that may be remote from the client device 200 (sometimes referred to generically as client 200). The hosted application 202 and server 204 is visually depicted as in the cloud 201 as is generally understood in the art. In some applications, the architecture of Figure 2 may be considered a thin client architecture. Thin client, in this context, means the user interacts with an application on a first computing device (client device 200 here) and a second computing device (server 204), typically remote from the first computing device performs some or a majority of the processing. Further, figure 2 shows the hosted application 202 as a Software as a Service application (or "SaaS"). SaaS is simply one common exemplary type of hosted application. The client device 200 receives data from an input 104 similar to the above that is operatively coupled to the client device 200, which is a thin client device in this exemplary embodiment but could be a fat client device. The client device 200 typically includes the monitor 110 that may project a display on the display 112 of the monitor 110. The data returned from the server application 202 may be a text document, in the case of certain types of dictation/transcription applications, or input to a graphical user interface displayed on the display 112, a result based on data entered into the graphical user interface, or the like. As can be appreciated, the change in relationship between the components of Figures 1 and 2 happens with network based applications, where the network based application is private or public. In a public environment, such applications may be referred to as Software as a Service or "SaaS" as mentioned above. Generally, SaaS is split into two pieces, a heavy-weight hosted application 202 running on a server 204 in a remote data center, and a light-weight client application 206 running on the client device 200 (while shown for convenience on the monitor 110) the client application 206 would be operating to cause the processor 203 of the thin client 200 to execute instructions. In our exemplary embodiment, where the hosted application 202 is a speech-to-text engine, the user speaks into the microphone 106 that is operatively connected to the client application 206 running on the client device 200. The client application 206 directs the audio to the hosted application 204 that processes the user's audio and sends instructions and data to the client application 206. Similarly to the above, the peripherals to the client device 200 may be connected to the client device 200 by cable, Bluetooth, or Wi-Fi. Distributed transcription systems are further described by, for example, U.S. Patent No. 8,150,689, titled Distributed Dictation/Transcription System, which issued April 3, 2012, and U.S. Patent No. 8,311,822, titled Method and System of Enabling Intelligent and Lightweight Speech to Text Transcription Through Distributed Environment, which issued November 13, 2012. US 2010/204989 A1 and US 2011/054896 disclose further background art useful for understanding the invention.

For remotely hosted engines processing the speech to text, the audio is processed by the server executing the hosted application. Therefore, the audio has to be sent from the client device to the server, often over a public network, such as the Internet. Sometimes this is a problematic. In one aspect, the audio rebroadcast by the client device to the server executing the hosted application may be of inferior quality due to the retransmission, intermittent connectivity, or low quality connectivity. For example, when the bandwidth from the client device to the server is poor, the connection interferes with the delivery of the audio to the server. In another example, the audio may be received by the client device, but the client device cannot deliver the audio to the server for processing. Another potential problem in this deployment scenario occurs when the user is in a secure environment, such as a hospital, which only grants Wi-Fi access to registered devices, which may preclude establishing a direct connection needed to the client device 200. These are but some examples of potential problems associated with the architecture in figure 2. Currently, the SaaS processing is simply unavailable when connectivity to the cloud or a private network is unavailable.

Thus, against this background, it is desirable to provide systems, methods, and apparatus for asynchronous speech to text data processing to allow SaaS processing when connectivity to the cloud or a private network is unavailable.

### SUMMARY

This Summary is provided to introduce a selection of concepts in a simplified form that are further described below in the Detailed Description. The invention is set out in the appended set of claims. This Summary, and the foregoing Background, is not intended to identify key aspects or essential aspects of the claimed subject matter. Moreover, this Summary is not intended for use as an aid in determining the scope of the claimed subject matter.

In some aspects of the technology, a method to allow for asynchronous speech recognition for a primary application's use is provided. The method comprises evoking a primary application, such as, for example, Microsoft WORD^{®} and a client device APP to work with a remote hosted application to process audio for the primary application. The APP connects to the hosted application, and if successful, the processing proceeds. If the APP cannot connect to the hosted application, the APP generates an input data file and a context file. The input data file may be an audio file in certain embodiments to record audio of a user dictating to the client device's microphone. The context file contains, among other things, the application information and navigation information such that the audio, once processed, may be inserted to the primary application based on the data contained in the context file. The APP checks for connectivity to the hosted application and, when connectivity is determined, transmits the input data file contents to the hosted application for processing. In certain aspects, the transmission may include the context file contents to persist the context with the contents of the input data. The APP receives the returned data (which is now processed, such as, for example, the audio file is now a text file). The returned data is matched with or contains the persisted context data. APP may have or the returned data may include an executable file to cause the client device to invoke the primary application and navigate to the data input position such that the APP (or executable file associated therewith) causes the data to be put into the application.

In some embodiments, the client device APP may have an alternative processing application on the client device. In these embodiments, when the APP cannot connect the hosted application such that the hosted application can process the data, the client device APP may transmit the data to the alternative processing application on the client device in addition to the other operations above. The alternative processing application would process the data and return an alternative processing application result. The APP, once connectivity is restored, would replace the alternative processing application result with the returned data from the hosted application. For example, the client device may have an alterative speech to text processing application, which may be not as accurate or not as robust as the hosted application speech to text processing application. Thus, the alternative processing application result may be less accurate in certain aspect but sufficient as a placeholder until the hosted application returns data.

In some embodiments, the APP, or the executable file associated therewith, may not be capable of evoking the primary application. In which case, the APP may provide an alert for the user to manually invoke the primary application and copy the returned data to the primary application. The alert or a subsequent display may include options for retrieving the returned data, such as copy, as well as navigation instructions so the user can identify and place the information in the correct application at the correct input.

These and other aspects of the present system and method will be apparent after consideration of the Detailed Description and Figures herein.

### DRAWINGS

Non-limiting and non-exhaustive embodiments of the present invention, including the preferred embodiment, are described with reference to the following figures, wherein like reference numerals refer to like parts throughout the various views unless otherwise specified.
Figure 1 is a functional block diagram of a thick client having an audio input to a local application on a local processor.
Figure 2 is a functional block diagram of a thin client having an audio input to a local processor that transmits and receives data with a remote server and a remotely hosted application.
Figure 3 is a functional block diagram of a thin client having an audio input to a local processor that transmits and receives data with a remote server and a remotely hosted application.
Figure 4 a graphical user interface of a wireless microphone application consistent with the technology of the present application.
Figure 5 is a graphical user interface of the wireless microphone of FIG. 4 showing an exemplary login consistent with the technology of the present application.
Figure 6 is a flow/sequence diagram for transmitting audio and data over the cloud based configuration of FIG. 3 consistent with the technology of the present application.
Figure 7 is an exemplary flow chart for asynchronous speech recognition with a hosted application based on the configuration of FIG. 3 consistent with the technology of the present application.
Figure 8 is an exemplary flow chart for asynchronous speech recognition with a hosted application based on the configuration of FIG. 3 consistent with the technology of the present application.
Figure 9 is an exemplary flow chart for asynchronous speech recognition with a hosted application based on the configuration of FIG. 3 consistent with the technology of the present application.

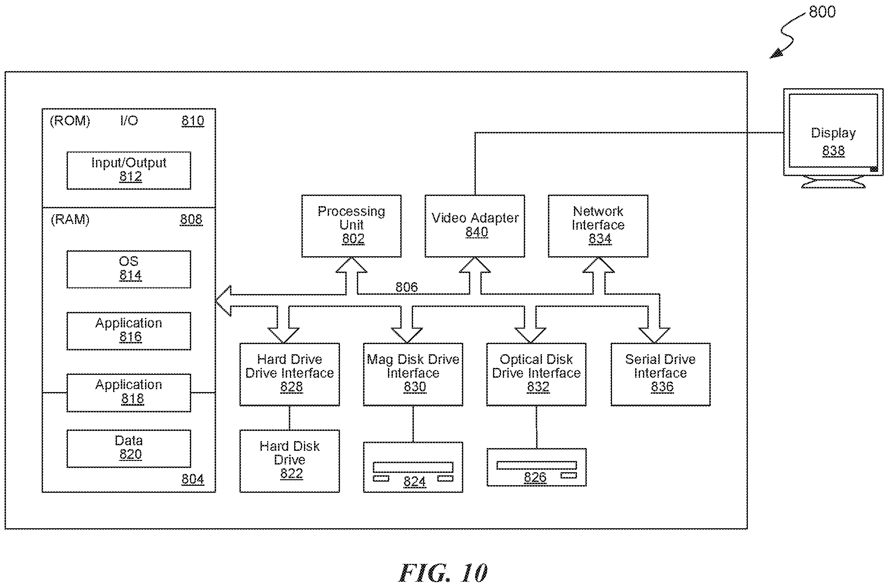

Figure 10 is a functional block diagram of a device on which the technology of the present application may be implemented.

### DETAILED DESCRIPTION

The technology of the present application will now be described more fully below with reference to the accompanying figures, which form a part hereof and show, by way of illustration, specific exemplary embodiments. These embodiments are disclosed in sufficient detail to enable those skilled in the art to practice the technology of the present application. However, embodiments may be implemented in many different forms and should not be construed as being limited to the embodiments set forth herein. The following detailed description is, therefore, not to be taken in a limiting sense.

The technology of the present application will be described with reference to particular discrete processors, modules, or parts, but one of ordinary skill in the art will recognize on reading the disclosure that processors may be integrated into a single processor or server, or separated into multiple processors or servers. Moreover, the technology of the present application will be described with specific reference to a remotely hosted application such as a speech recognition data processing application, module, or engine. However, the technology described herein may be used with applications other than those specifically described herein. For example, the technology of the present application may be applicable to other types of SaaS or the like. Moreover, the technology of the present application will be described with relation to exemplary embodiments. The word "exemplary" is used herein to mean "serving as an example, instance, or illustration." Any embodiment described herein as "exemplary" is not necessarily to be construed as preferred or advantageous over other embodiments. Additionally, unless specifically identified otherwise, all embodiments described herein should be considered exemplary.

For reference, the technology of the present application provides a workstation that comprises a client device or computer. The client device or computer may be a desktop computer, a laptop computer, a tablet computer, a smartphone, a thin client terminal, or the like. The technology also provides an input device such as a wireless microphone where the wireless microphone may be the microphone in a conventional smartphone or tablet. The wireless microphone may be referred to as the wireless microphone, mobile device, or smartphone. The technology also provides for other input devices or emulators such as virtual keyboards, mice, pens and other sensors, which may also be associated with applications running on a client device. Without loss of generality, the description of the technology will use the microphone as the exemplar input device. The client device will typically be running an application to allow the client device to interact with the remotely hosted application or applications when internet connectivity is available. The application on the client device may be referred to as an "APP". The remotely hosted application is hosted on a server that is typically, but not necessarily, remote from the client device. The remotely hosted application also interacts with a client application operating on the client device. The remotely hosted application may be referred to as a "hosted application" or a "SaaS" application.

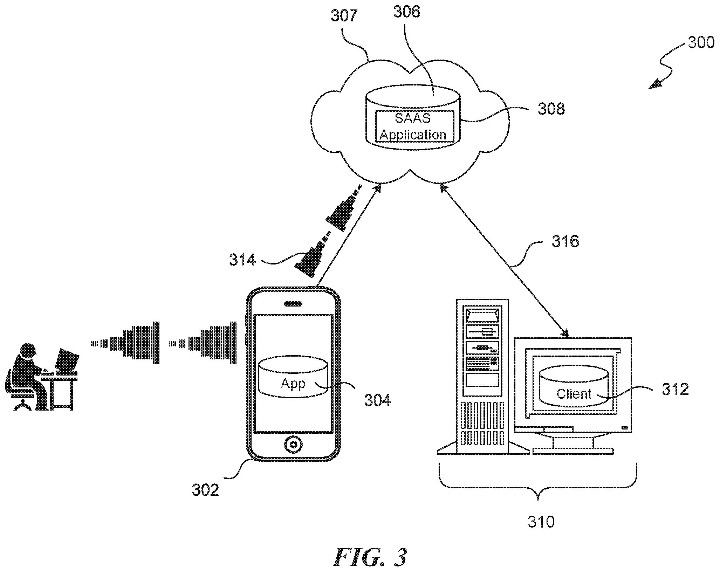

With reference now to figure 3, the technology of the present application will now be explained in detail with reference to system 300. System 300 shows overall operation of the technology of the present application. System 300 includes a client device 302, which in this case is shown as a smartphone but could be any client device 302 configured to have a network connection to a hosted application. The client device 302 includes an APP 304 to allow the client device 302 to receive data from a client (a.k.a. user) of the client device 302. While shown on the display of client device 302, the APP 304 would be stored in a memory of the client device 302 and executed by a processor of the device. The system 300 also includes a server 306 hosting an application 308, generally referred to as the SaaS Application 308. The server 306 and hosted application 308 may be considered to be in a cloud 307. The server 306 includes a processor and a memory where the memory comprises instructions, such as the hosted application 308, which the processor can execute. In this exemplary embodiment, the APP 304 executing on the client device 302 receives audio from the client and, in the normal course, facilitates the transfer of the audio from the client device 302 to the server 306 for use by the hosted application 308. The server 306 processes the instructions associated with hosted application 308 to process data or commands received from the APP 304. In this exemplary embodiment, the hosted application 308 in conjunction with the server 306 processor and memory would convert the audio from the client into a data string representative of the text. The hosted application 308 and server 306, in the normal course, return the processed data or commands to the APP 304. The client device 302 has a memory and a processor as well where the memory comprises instructions, such as the APP 304, which the processor can execute. The APP 304 would execute the processed data or commands to, for example, show a text document using the data string returned from the server 306.

The client device 302 is coupled to the server 306 and the hosted application 308 through a first communication link 314. The first communication link 314 may be via the cellular connectivity to the hosted application 308, which first communication link 314 may include a cellular tower, a media gateway, or the like, and a network connection to the hosted application where the network connection is the Internet, although a private network could be used as well. The first communication link 314 also may be via a wireless connection to the network, which first communication link 314 may include a Wi-Fi router or similar other wireless connections to the internet.

Of course, figure 3 shows a single client device 302 coupled to the server 306 and the hosted application 308. It is envisioned that a plurality of client devices 302 will be connected to the hosted application 308 (or several instances of the hosted application 308). Thus, the various components typically register the client device 302 (or the APP 304) with the hosted application 308 such that the audio from the client device 302 is operatively coupled to a client account.

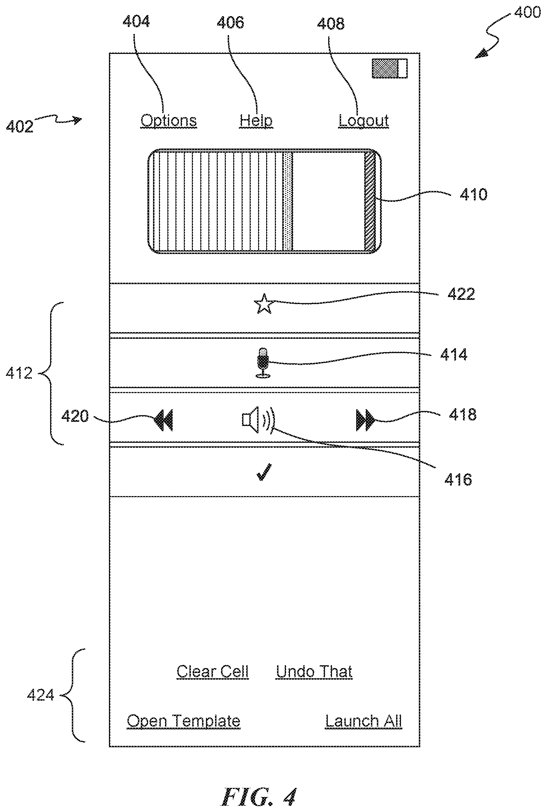

Generally, the APP 304 is downloaded and installed on the client device 302, which may be for example, a smartphone. The APP 304 may launch and provide a graphical user interface (GUI) 400 as shown in figure 4. In certain embodiments, the GUI 400 may be associated with an enterprise productivity or office automation application. The GUI 400 also may show the processed data returned from the hosted application 308 in certain embodiments. While not specifically shown, in certain embodiments, the GUI 400 may include a display for the results of the processed data. In this exemplary GUI 400, a menu bar 402 may be provided, as shown the menu bar 402 is provided at the top of the GUI 400 as is conventional with smartphone app features. The menu bar 402 may include items, such as an options tab 404, a getting help tab 406, and a logging in/out tab 408, which allows the user to provide the necessary credentials to the hosted application 308 on the server 306. For reference, tabs and buttons are generally used interchangeably herein. The hosted application 308 uses the credentials that have been separately submitted from the APP 304 to associate the APP 304 and the client device 302 with a client account. Other functions illustrated here are an audiometer 410 that tells the user how quietly/loudly he is speaking. The audiometer 410 is shown as a bar graph that fills as the volume of the speaker increases or decreases, but the audiometer 410 could be replaced with a numerical indication, such as a percentage or a decibel number. In other embodiments, the audiometer 410 may simply a word or phrases, such as "too quiet", "too loud", or "volume ok", or the like.

The GUI 400 also may include a collection of buttons 412 for handling data capture, such as voice capture for audio processing, and review. The buttons may include a record button 414, such as the microphone button shown, a listen button 416, such as the speaker button shown, a forward button 418 and a rewind button 420 (or reverse/backwards button). The forward and rewind buttons may have fast versions and skips or the like. To facilitate forward and rewind, the audio transmitted from the wireless microphone may be tagged and the subsequent text transmitted to the client device may be similarly tagged such that, for example, a rewind command can be coordinated with text transmitted to the client device. In this exemplary embodiment, the GUI 400 also provides a shortcut button 422, as shown by the star button. The shortcut button 422 may bring up a menu with other options or provide for voice activation or commands. Additional buttons 424 may be provided to which different commands/actions can be assigned.

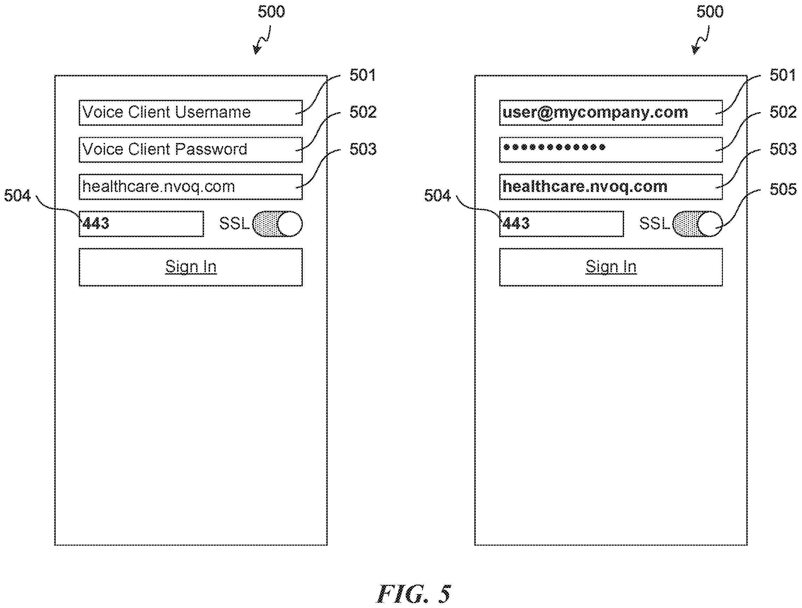

With refer to FIG. 5, the GUI 400 is shown when the logging in/out tab 408 has been selected. The log in graphical user interface 500 allows the APP 304 to gather the necessary information to associate the session on the client device 302 with the user or client account of the hosted application 308 on the server 306. In this exemplary case, the APP 304 gathers the user's credentials (User ID 501 and Password 502) as well as the IP address 503 (and port 504) of the hosted application 308, which in this exemplary embodiment is a speech to text workflow application such as, for example, the SayItTM application available from nVoq Incorporated, of Boulder Colorado. This example also allows the user to specify that an encrypted connection be used (the "SSL" option on/off button 505).

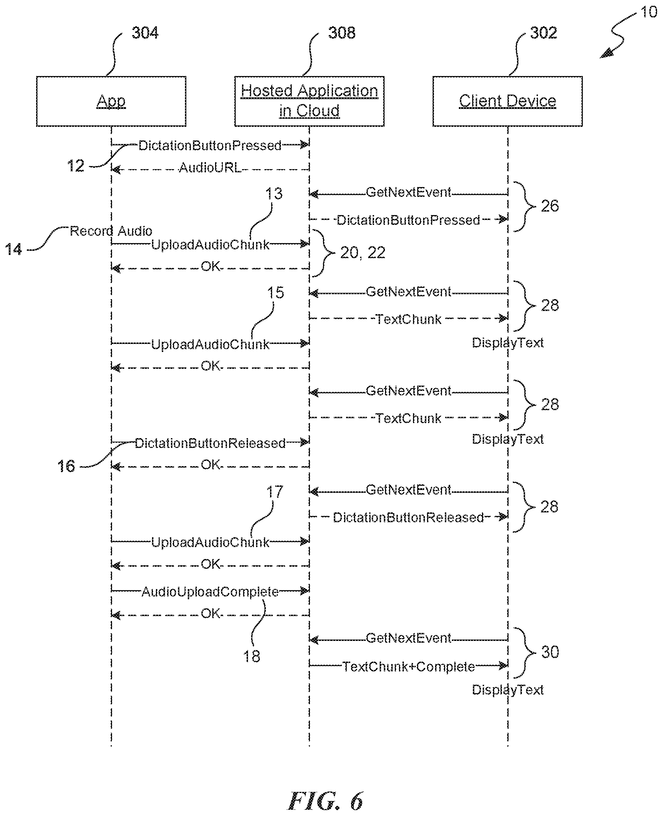

A flowchart 10 is provided in FIG. 6 showing one exemplary methodology for the process flow of audio, where the user of the client device 302 dictates to the APP 304 and the transcribed text, which the server 306 hosting the application 308 generates from the dictation, is received by the APP 304 and displayed on the client device 302. The process starts after the above associations. The uploads from the APP 304 and the downloads to the client device 302 described herein can occur at different times, but they are explained together herein generally occurring as the data is streamed from one device to the next, e.g., generally real time. However, as will be further explained below, when internet connectivity is not available, the technology of the present application has a flow different from the operating state with internet connectivity as explained in FIG. 6. First, the dictation function of the APP 304 is initiated by, for example, pressing (and holding in some embodiments) a dictation button, such as the record button 414, step 12. The user begins speaking into the client device 302 to record the dictation, step 14. When the dictation is complete, the user may release the record button 414, step 16. Notice, in certain embodiments instead of pressing and holding the record button 414, the record button may initiate on a first press and release (or tap) and terminate on a second press and release (or tap). The APP 304 notifies the hosted application 308 that it has finished a recording session, step 18.

While the user is recording audio, the APP 304 periodically uploads audio to the hosted application 308, step 13 and 15, shown as being uploaded during the recording and step 17 showing final audio being uploaded subsequent to the termination of the recording. There is not a requirement that the final audio upload occurs subsequent to the stoppage of the recording as the APP 304 may automatically expunge silence at the end of a recording. Rather than uploading chunks, audio may be streamed in certain embodiments

The hosted application 308 at the server 306 begins receiving the audio, step 20, and transcribes the received audio, step 22. The transcribed audio is queued as corresponding chunks of text, step 24. The hosted application 308 periodically returns text to client device 302 to be displayed or inserted into the appropriate text/data field, be it an editable field in a GUI, a spreadsheet, a text document, or the like. Moreover, the hosted application 308 monitors the transmission for an indication of the next event, step 26, which in this exemplary embodiment is the next chunk of transcribed text. The new text chunks are transmitted (pushed or pulled) from the hosted application 308 to the client device 302, step 28. In certain embodiments, the transcribed text may be streamed. The client 302 uses the text as required by the client application for which the APP 304 is receiving audio, such as, for example, displaying the transcribed text. When the transcribed text is all transmitted, the hosted application may notify the client device 302 that the transcription is complete, step 30, which may be used as a check against the completion of the audio signal from the APP 304.

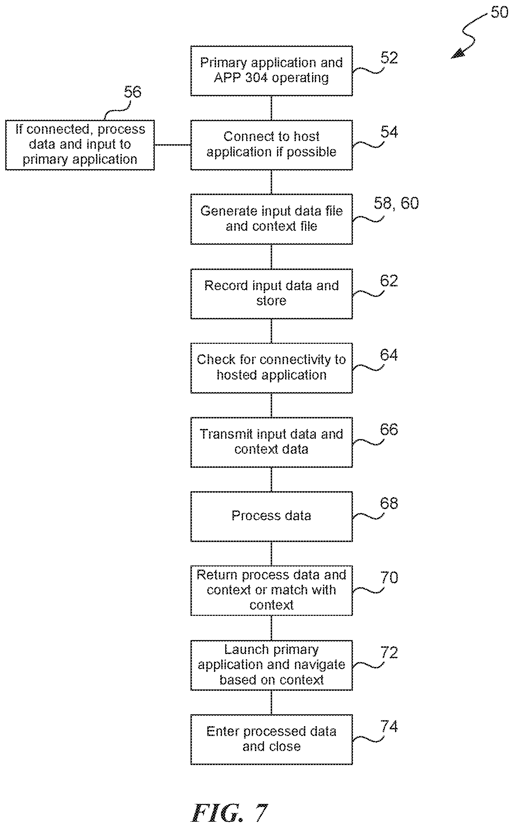

Consistent with the technology, FIG. 7 provides a flowchart 50 showing one exemplary methodology for the process flow of audio, where the user of the client device 302 dictates to the APP 304 without internet connectivity being available. Generally, flowchart 20 starts with a primary application operating and APP 304 launched, invoked, or initiated, to support using audio to interact with the primary application, step 52. APP 304 attempts to operatively connect, via a handshaking protocol or the like, to hosted application 308 on server 306, step 54. If APP 304 connects to the hosted application 308, operation generally continues as outlined above with figure 6. APP 304 causes data, which is audio in this exemplary embodiment, to be transmitted to the hosted application that is processed and returned data to populate the primary application, step 56, which may be data input to an editable field, a text documents, or the like of the primary application. If APP 304 cannot connect to the hosted application 308, the APP 304 generates an input data file, which in this case is an audio data file, to receive the input data or audio, step 58. The APP 304 also generates a context file, step 60. The context file may be meta data appended to the audio file or a separate file otherwise linked to the audio file, such as in a relationship database or the like. The context file contains sufficient information to locate the data entry in the primary application. The context file may include the identification, including release and version numbers, of the primary application (such as, for example, Word, Excel, or the like), operating system information, an interface page or screen, a tab designation within the primary application, a unique identification for the data being input, updated, or created, the time the input data was received, location information, and the like. The APP 304 would next record the input data, step 62. In some embodiments, a step 63 not shown in the flow chart, may include, among other things, using an alternative processing application contained on the client device to process the input data file and populate the primary application.

For the exemplary audio input case, while the APP 304 creates the audio input file and the context file, the user can dictate audio to the APP 304 for the entry. For example, if the APP 304 was working with a primary application relating to an electronic health record and specifically inputting patient temperature, the APP 304 may record "98.6 degrees Fahrenheit". The APP 304 in the case where the hosted application 308 is not connected, records or stores the audio in the audio data file and the context of the electronic health record, patient identification, time, date, and temperature fields for the cursor location, for example, in the context file. The context file may be stored as meta data for the audio data file or as a linked or otherwise persisted file associated with the audio file. The user, in this exemplary embodiment, may next move to the blood pressure field in the electronic health record and APP 304 may receive "120 over 80" as the audio. The APP 304 would store the audio in a new audio data file and the context of the electronic health record, patient identification, time, date, and blood pressure field for the cursor location in the associated context file. If an alternative processing application is available, the alternative processing application may convert the audio to text and populate the associated data fields of the electronic health record. In some instances, the alternative processing application may not be as accurate or robust as the hosted application 308.

The process of creating audio data files, receiving and storing audio, and recreating associated context files is completed for all tasks the user of APP 304 takes, whether the same primary application as above or whether transitioning between primary applications, such as Word application, a document management application, a customer relationship management application, an Excel application, or the like.

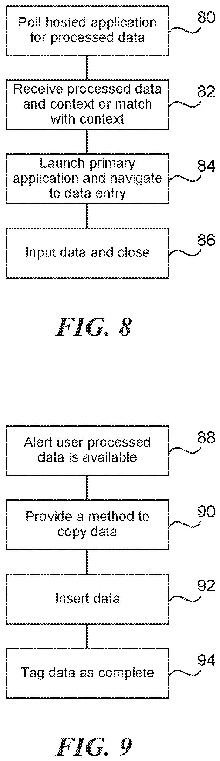

The APP 304, or another module associated with APP 304, checks for connectivity to the hosted application 308, step 64. The APP 304 can check for connectivity continuously, periodically, or the like. Checking for connectivity could be a flag in APP 304 that changes between connected and not connected or the like as well. Once connectivity is established, the APP 304 transmits audio data saved in audio data files along with the context file to the hosted application 308 on sever 306, step 66. The hosted application 308 processes the input data, which in this exemplary embodiment the hosted application is a speech to text module that converts the audio file to a text file, step 68. In certain embodiments, the hosted application returns the text file and context file to the client device 302, step 70. The download includes an executable file for the processor in client device 302 to execute. The client device causes the primary application to launch (potentially in the background) and navigates to the appropriate page, tab, cursor position or the like as identified by the persistent context file, step 72. The client device next enters the processed data from the hosted application, which in this case is text, based on the navigation from the context file, step 74. Step 74 may include replacing data received from the alternative processing application. Alternatively to the hosted application 308 pushing the download, the APP 304 may poll the hosted application 308 for processed data and context files as shown in FIG. 8. The APP 304 has a memory of audio data files and context files created. The APP 304 may poll the hosted application for processed data (and the context file) for each audio data file and context file created that does not have a corresponding processed data file, step 80. The APP 304 may pull (or the hosted application 308 may still push) the processed data to the APP 304, step 82. The client device causes the primary application to launch (potentially in the background) and navigates to the appropriate page, tab, cursor position or the like as identified by the persistent context file, step 84. The client device next enters the processed data from the hosted application, which in this case is text, based on the navigation from the context file, step 86. Notice, because the APP 304 is polling based on an audio file, context file pair, the hosted application 308 may not need to be provided with the context file as it should be identical to the context file of the audio file, context file pair.

In certain aspect, the APP 304 (or the executable file downloaded with the processed data) cannot launch or cannot invoke the primary application. Thus, after obtaining the returned data (step 70 or 80 above for example), the APP 304 may alert a user of client device 302 that and the transcribed text, which the server 306 hosting the application 308 generates from the dictation, is received by the APP 304 and displayed on the client device 302 that processed data is available, step 88, as shown in FIG. 9. the client application will present a list of transcriptions processed asynchronously which have yet to be dispositioned. The presentation will include, but not be limited to, the context information stored at input data recording, such as when the dictation is made in an audio input, a preview of the transcription text, user information, etc. APP 304 may present a method to copy the input data, which may be transcription data, step 90. The user would manually insert the data to the target application and location as shown by the context data displayed, step 92. The user may subsequently mark the file as transferred to the primary application, step 94.

This method of dispositioning the results of audio recording and asynchronous speech recognition across multiple devices uniquely solves the problem of effectively utilizing the results of a hosted service in an environment of intermittent connectivity. This same method could be applied to address other use cases resulting in asynchronous operation including, but not limited to, other resource constraints such as CPU or memory, client application design and workflow, recording device configuration, and the like.

Referring now to figure 110 a functional block diagram of a typical machine capable of incorporating the technical solutions of the present application. The machine may be the wireless microphone, thin or thick client, server of the like. The client device 800 for the technology of the present application is provided. Client device 800 is shown as a single, contained unit, such as, for example, a desktop, laptop, handheld, or mobile processor, but client device 800 may comprise portions that are remote and connectable via network connection such as via a LAN, a WAN, a WLAN, a Wi-Fi Network, Internet, or the like. The client device 800 could be associated with the client device 302, the server 306, or other devices. Generally, client device 800 includes a processor 802, a system memory 804, and a system bus 806. System bus 806 couples the various system components and allows data and control signals to be exchanged between the components. System bus 806 could operate on any number of conventional bus protocols. System memory 804 generally comprises both a random access memory (RAM) 808 and a read only memory (ROM) 810. ROM 810 generally stores a basic operating information system such as a basic input/output system (BIOS) 812. RAM 808 often contains the basic operating system (OS) 814, application software 816 and 818, and data 820. System memory 804 contains the code for executing the functions and processing the data as described herein to allow the present technology of the present application to function as described. Client device 800 generally includes one or more of a hard disk drive 822 (which also includes flash drives, solid state drives, and etc. as well as other volatile and non-volatile memory configurations), a magnetic disk drive 824, or an optical disk drive 826. The drives also may include zip drives and other portable devices with memory capability. The drives are connected to the bus 806 via a hard disk drive interface 828, a magnetic disk drive interface 830 and an optical disk drive interface 832, etc. Application modules and data may be stored on a disk, such as, for example, a hard disk installed in the hard disk drive (not shown). Client device 800 has network connection 834 to connect to a local area network (LAN), a wireless network, an Ethernet, the Internet, or the like, as well as one or more serial port interfaces 836 to connect to peripherals, such as a mouse, keyboard, modem, or printer. Client device 800 also may have USB ports or wireless components, not shown. Client device 800 typically has a display or monitor 838 connected to bus 806 through an appropriate interface, such as a video adapter 840. Monitor 838 may be used as an input mechanism using a touch screen, a light pen, or the like. On reading this disclosure, those of skill in the art will recognize that many of the components discussed as separate units may be combined into one unit and an individual unit may be split into several different units. Further, the various functions could be contained in one personal computer or spread over several networked personal computers. The identified components may be upgraded and replaced as associated technology improves and advances are made in computing technology. The speech recognition engines may have similar constructions.

Some aspects of the technology include among other thing, a method to allow a thin client device using dictation to provide dictation functionality when the thin client device does not have connectivity to a remotely hosted speech to text application. The method comprising invoking, at the thin client device, an application configured to receive audio data and transmit the audio data over a communication link to the remotely hosted speech to text application. Determining, by the application on the thin client device, whether the communication link to transmit the audio data is available to allow communication of the audio data to the remotely hosted speech to text application. If the communication link to the remotely hosted speech to text application is available, transmitting the audio data to the remotely hosted speech to text application wherein the remotely hosted speech to text application is configured to convert the audio data to textual data and, if the communication link to the remotely hosted speech to text application is not available, generating, on the thin client device, an audio data file, generating, on the thin client device, a context file, storing, in the audio data file, audio data received by the thin client device, and storing, in the context file, data, commands, or data and commands such that on execution, the thin client device can navigate to a text entry field for which the audio data was generated.

The method above further includes, when the communication link to the remotely hosted speech to text application is not available, monitoring, at the thin client device, for re-establishment of the communication link to the remotely hosted speech to text application and transmitting the audio data from the audio data file to the remotely hosted speech to text application wherein the remotely hosted speech to text application is configured to convert the audio data from the audio data file to textual data, receiving, at the thin client device, the textual data generated by the remotely hosted speech to text application, navigating, by the thin client device, to the text entry field using the data, commands, or data and command stored in the context file, and populating the text entry field with the textual data.

In some embodiments, the methods above where the text entry field is an editable tab in a graphical user interface.

In some embodiments, the methods above include the text entry field being a text document.

In some embodiments, the methods above include metadata being appended to the audio data file.

In some embodiments, the methods above include when the data, commands, or data and commands stored in the context file are transmitted to the remotely hosted speech to text application along with the audio data from the audio data file.

In some embodiments, the methods above include using an alternative processing application to process the data and populate a primary application.

In some embodiments, the methods above include replacing the data from the alternative processing application by the data returned from the hosted application.

Those of skill would further appreciate that the various illustrative logical blocks, modules, circuits, and algorithm steps described in connection with the embodiments disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. The above identified components and modules may be superseded by new technologies as advancements to computer technology continue.

The various illustrative logical blocks, modules, and circuits described in connection with the embodiments disclosed herein may be implemented or performed with a general purpose processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The previous description of the disclosed embodiments is provided to enable any person skilled in the art to make or use the present invention. Various modifications to these embodiments will be readily apparent to those skilled in the art, and the generic principles defined herein may be applied to other embodiments. Thus, the present invention is not intended to be limited to the embodiments shown herein but is to be accorded the widest scope as defined by the claims.

Although the technology has been described in language that is specific to certain structures and materials, it is to be understood that the invention defined in the appended claims is not necessarily limited to the specific structures and materials described. Rather, the specific aspects are described as forms of implementing the claimed invention. Because many embodiments of the invention can be practiced, the invention resides in the claims hereinafter appended.

## Claims

1. A method to allow a thin client device using dictation to provide dictation functionality when the thin client device does not have connectivity to a remotely hosted speech to text application, the method comprising,
invoking, at the thin client device, an application configured to receive audio data and transmit the audio data over a communication link to the remotely hosted speech to text application,
determining, by the application on the thin client device, whether the communication link to transmit the audio data is available to allow communication of the audio data to the remotely hosted speech to text application,
if the communication link to the remotely hosted speech to text application is available, transmitting the audio data to the remotely hosted speech to text application wherein the remotely hosted speech to text application is configured to convert the audio data to textual data;
if the communication link to the remotely hosted speech to text application is not available,
generating, on the thin client device, an audio data file,
generating, on the thin client device, a context file,
storing, in the audio data file, audio data received by the thin client device, and
storing, in the context file, data, commands, or data and commands such that on execution the thin client device can navigate to a text entry field for which the audio data was generated,
monitoring, at the thin client device, for re-establishment of the communication link to the remotely hosted speech to text application and transmitting the audio data from the audio data file to the remotely hosted speech to text application wherein the remotely hosted speech to text application is configured to convert the audio data from the audio data file to textual data,
receiving, via a download at the thin client device, the textual data generated by the remotely hosted speech to text application and an executable file to launch an application having the text entry field,
executing the executable file downloaded at the thin client device to launch the application having the text entry field;
navigating, by the thin client device, to the text entry field using the data, commands, or data and command stored in the context file, subsequent to launching the application having the text entry field, and
populating the text entry field with the textual data.

2. The method of claim 1 wherein the text entry field is an editable tab in a graphical user interface.

3. The method of any of the proceeding claims wherein the text entry field is a text document.

4. The method of any of the proceeding claims wherein the context file comprises metadata appended to the audio data file.

5. The method of any of the proceeding claims wherein the data, commands, or data and commands stored in the context file are transmitted to the remotely hosted speech to text application along with the audio data from the audio data file.

6. The method of any of the proceeding claims further comprising processing the audio data by an alternative speech to text application on the thin client device.

7. The method of claim 6 wherein the alternative speech to text application data temporarily populates the primary application data field.

8. The method of claims 6 and 7 wherein textual data received from the hosted application replaces the alternative speech to text application data.

## Patentansprüche

1. Verfahren, um zuzulassen, dass eine Thin-Client-Vorrichtung, unter Verwendung von Diktieren, eine Diktierfunktion bereitstellt, wenn die Thin-Client-Vorrichtung keine Verbindung mit einer remote gehosteten Sprache-zu-Text-Anwendung hat, wobei das Verfahren Folgendes umfasst
Aufrufen, auf der Thin-Client-Vorrichtung, einer Anwendung, die konfiguriert ist, um Audiodaten zu empfangen und die Audiodaten über eine Kommunikationsverbindung an die remote gehostete Sprache-zu-Text-Anwendung zu übertragen,
Bestimmen, durch die Anwendung auf der Thin-Client-Vorrichtung, ob die Kommunikationsverbindung, um die Audiodaten zu übertragen, verfügbar ist, um Kommunikation der Audiodaten mit der remote gehosteten Sprache-zu-Text-Anwendung zuzulassen,
wenn die Kommunikationsverbindung mit der remote gehosteten Sprache-zu-Text-Anwendung verfügbar ist, Übertragen der Audiodaten an die remote gehostete Sprache-zu-Text-Anwendung, wobei die remote gehostete Sprache-zu-Text-Anwendung konfiguriert ist, um die Audiodaten in Textdaten umzuwandeln;
wenn die Kommunikationsverbindung mit der remote gehosteten Sprache-zu-Text-Anwendung nicht verfügbar ist,
Generieren, auf der Thin-Client-Vorrichtung, einer Audiodatendatei,
Generieren, auf der Thin-Client-Vorrichtung, einer Kontextdatei,
Speichern, in der Audiodatendatei, von Audiodaten, die von der Thin-Client-Vorrichtung empfangen werden, und
Speichern, in der Kontextdatei, von Daten, Befehlen oder Daten und Befehlen, sodass bei Ausführung die Thin-Client-Vorrichtung zu einem Texteingabefeld navigieren kann, für das die Audiodaten generiert wurden,
Überwachen, auf der Thin-Client-Vorrichtung, zur Wiederherstellung der Kommunikationsverbindung mit der remote gehosteten Sprache-zu-Text-Anwendung und Übertragung der Audiodaten von der Audiodatendatei an die remote gehostete Sprache-zu-Text-Anwendung, wobei die remote gehostete Sprache-zu-Text-Anwendung konfiguriert ist, um die Audiodaten von der Audiodatendatei zu Textdaten umzuwandeln,
Empfangen, über einen Download auf der Thin-Client-Vorrichtung, der Textdaten, die durch die remote gehostete Sprache-zu-Text-Anwendung generiert werden, und einer ausführbaren Datei, um eine Anwendung mit dem Texteingabefeld zu starten,
Ausführen der ausführbaren Datei, die auf der Thin-Client-Vorrichtung heruntergeladen wird, um die Anwendung mit dem Texteingabefeld zu starten;
Navigieren, durch die Thin-Client-Vorrichtung, zu dem Texteingabefeld unter Verwendung der Daten, Befehle oder der Daten und des Befehls, die in der Kontextdatei gespeichert sind, anschließend an das Starten der Anwendung mit dem Texteingabefeld, und
Befüllen des Texteingabefelds mit den Textdaten.

2. Verfahren nach Anspruch 1, wobei das Texteingabefeld eine editierbare Registerkarte in einer grafischen Benutzeroberfläche ist.

3. Verfahren nach einem der vorhergehenden Ansprüche, wobei das Texteingabefeld ein Textdokument ist.

4. Verfahren nach einem der vorhergehenden Ansprüche, wobei die Kontextdatei Metadaten umfasst, die an die Audiodatendatei angehängt sind.

5. Verfahren nach einem der vorhergehenden Ansprüche, wobei die Daten, Befehle oder Daten und Befehle, die in der Kontextdatei gespeichert sind, an die remote gehostete Sprache-zu-Text-Anwendung zusammen mit den Audiodaten aus der Audiodatendatei übertragen werden.

6. Verfahren nach einem der vorhergehenden Ansprüche, ferner umfassend das Verarbeiten der Audiodaten durch eine alternative Sprache-zu-Text-Anwendung auf der Thin-Client-Vorrichtung.

7. Verfahren nach Anspruch 6, wobei die Daten der alternativen Sprache-zu-Text-Anwendung das primäre Anwendungsdatenfeld temporär befüllen.

8. Verfahren nach Ansprüchen 6 und 7, wobei Textdaten, die von der gehosteten Anwendung empfangen werden, die Daten der alternativen Sprache-zu-Text-Anwendung ersetzen.

## Revendications

1. Procédé permettant à un dispositif client léger utilisant la dictée de fournir une fonctionnalité de dictée lorsque le dispositif client léger n'a pas de connectivité à une application de saisie vocale hébergée à distance, le procédé comprenant les étapes consistant à :
appeler, sur le dispositif client léger, une application conçue pour recevoir des données audio et les transmettre par un lien de communication à l'application de saisie vocale hébergée à distance,
déterminer, par l'application exécutée sur le dispositif client léger, la disponibilité du lien de communication pour transmettre les données audio afin de permettre une communication des données audio vers l'application de saisie vocale hébergée à distance,
si le lien de communication avec l'application de saisie vocale hébergée à distance est disponible, transmettre les données audio à l'application de saisie vocale hébergée à distance, l'application de saisie vocale hébergée à distance étant conçue pour convertir les données audio en données textuelles ;
si le lien de communication avec l'application de saisie vocale hébergée à distance n'est pas disponible :
générer, sur le dispositif client léger, un fichier de données audio,
générer, sur le dispositif client léger, un fichier de contexte,
stocker, dans le fichier de données audio, des données audio reçues par le dispositif client léger, et
stocker, dans le fichier de contexte, des données, des commandes ou des données et des commandes telles que, lors de l'exécution, le dispositif client léger puisse naviguer jusqu'à un champ de saisie de texte pour lequel les données audio ont été générées,
surveiller, sur le dispositif client léger, le rétablissement du lien de communication avec l'application de saisie vocale hébergée à distance et transmettre les données audio du fichier de données audio à l'application de saisie vocale hébergée à distance, l'application de saisie vocale hébergée à distance étant conçue pour convertir les données audio du fichier de données audio en données textuelles,
recevoir, par l'intermédiaire d'un téléchargement sur le dispositif client léger, les données textuelles générées par l'application de saisie vocale hébergée à distance et un fichier exécutable permettant de lancer une application dotée d'un champ de saisie de texte,
exécuter le fichier exécutable téléchargé sur le dispositif client léger pour lancer l'application dotée du champ de saisie de texte ;
naviguer, par le dispositif client léger, vers le champ de saisie de texte à l'aide des données, des commandes, ou des données et des commandes stockées dans le fichier de contexte après le lancement de l'application dotée d'un champ de saisie de texte, et
remplir le champ de saisie de texte avec les données textuelles.

2. Procédé selon la revendication 1, dans lequel le champ de saisie de texte est un onglet modifiable dans une interface utilisateur graphique.

3. Procédé selon l'une quelconque des revendications précédentes, dans lequel le champ de saisie de texte est un document textuel.

4. Procédé selon l'une des revendications précédentes, dans lequel le fichier de contexte comprend des métadonnées adjointes au fichier de données audio.

5. Procédé selon l'une quelconque des revendications précédentes, dans lequel les données, les commandes ou les données et les commandes stockées dans le fichier de contexte sont transmises à l'application de saisie vocale hébergée à distance, en même temps que les données audio du fichier de données audio.

6. Procédé selon l'une quelconque des revendications précédentes, comprenant en outre un traitement des données audio par une autre application de saisie vocale exécutée sur le dispositif client léger.

7. Procédé selon la revendication 6, dans lequel les données de l'autre application de saisie vocale remplissent temporairement le champ de données de la première application.

8. Procédé selon les revendications 6 et 7, dans lequel des données textuelles reçues en provenance de l'application hébergée remplacent les données de l'autre application de saisie vocale.
